# EUROPÄISCHE PATENTSCHRIFT

(11) **EP 3 308 936 B1**
(45) Veröffentlichungstag und Bekanntmachung des Hinweises auf die Patenterteilung: **08.12.2021**
(21) Anmeldenummer: 17188815.9
(22) Anmeldetag: 31.08.2017
(51) Int. Cl.: B29C 45/42, B25J 9/02, B25J 19/00

(54) **KUNSTSTOFFSPRITZGUSSMASCHINE MIT HANDHABUNGSEINRICHTUNG**
PLASTICS INJECTION-MOULDING MACHINE WITH HANDLING DEVICE
MACHINE DE MOULAGE PAR INJECTION DE MATIÈRE PLASTIQUE DOTÉE D'UN DISPOSITIF DE MANUTENTION

(30) Priorität: 13.10.2016 DE 102016119569
(43) Veröffentlichungstag der Anmeldung: 18.04.2018
(73) Patentinhaber: Klaus-Dieter Klement Verwaltungs GmbH, 06667 Weißenfels (DE)
(72) Erfinder: KLEMENT, Alexander Timo, 52428 Jülich (DE)
(74) Vertreter: Lorenz, Bernd Ingo Thaddeus

(56) Entgegenhaltungen:
- DE-A1-102014 009 122
- DE-U1- 9 107 639
- JP-A- 2009 269 100
- US-A1- 2011 268 549
- US-B1- 6 409 945
- Anonym: "MIDLINER 3.0", , 13. Juni 2014 (2014-06-13), Seiten 1-2, XP055450499, www.geigerhandling.com Gefunden im Internet: URL:http://www.geigerhandling.com/pdf-flye r/flyer_midliner_3-0.pdf [gefunden am 2018-02-12]

## Beschreibung

Die Erfindung betrifft eine Kunststoffspritzgussmaschine mit einem eine Spritzgussanordnung aufnehmenden Maschinengestell und mit einer oberhalb der Spritzgussanordnung auf dem Maschinengestell angeordneten Handhabungseinrichtung, wobei die Handhabungseinrichtung eine sich in eine erste horizontale Richtung entlang einer Längsrichtung des Maschinengestells erstreckende und auf dem Maschinengestell befestigte Linearführung und einen entlang der Linearführung verfahrbar angeordneten ersten Schlitten aufweist, wobei auf dem ersten Schlitten eine Linearführungseinrichtung mit einem sich entlang einer zweiten horizontalen Richtung erstreckenden Hubabschnitt befestigt ist, auf dem ein zweiter Schlitten verfahrbar gelagert ist, und wobei der zweite Schlitten ein Handhabungsmodul trägt.

Kunststoffspritzgussmaschinen der eingangs beschriebenen Art sind aus der Praxis grundsätzlich bekannt. Hierbei handelt es sich um Maschinen, die aus Kunststoff, welcher beispielsweise zunächst als Granulat vorliegt, Kunststoffteile formen. Dazu wird in der Spritzgussanordnung die benötigte Kunststoffmasse zunächst durch Aufschmelzen des Rohmaterials aufbereitet und über eine Schnecke plastifiziert und in ein Werkzeug gepresst, wobei das Werkzeug die negative Form des zu fertigenden Kunststoffteils aufweist. Hierbei kann die Produktion des Formteils in einer im Wesentlichen horizontalen Produktionsrichtung erfolgen. Nach Herstellung des Formteils kann dieses aus der Spritzgussanordnung entnommen und beispielsweise in einen entsprechenden Transportbehälter gelegt werden. Hierzu weisen derartige Kunststoffspritzgussmaschinen häufig eine Handhabungseinrichtung auf, die oberhalb der Spritzgussanordnung auf einem Maschinengestell angeordnet ist. Dies hat den Vorteil, dass das in der Spritzgussanordnung gefertigte Formteil von oben aus der Spritzgussanordnung entnommen werden kann. Hierdurch können derartige Spritzgussmaschinen besonders platzsparend in einem begrenzten Raum, beispielsweise in einer Werkhalle, angeordnet werden, da seitlich der Spritzgussanordnung keine Komponenten für die Handhabungseinrichtung vorgesehen werden müssen.

Als Handhabungseinrichtung kommen bei Kunststoffspritzgussmaschinen üblicherweise lineargeführte Handhabungseinrichtungen zum Einsatz, da diese eine besonders hohe Stellgeschwindigkeit aufweisen, so dass eine hohe Wiederholungsfrequenz des Transportvorganges erzielt werden kann. Zugleich sind sie kostengünstig im Aufbau und relativ einfach zu steuern. Eine Handhabungseinrichtung für Spritzgussmaschinen ist aus der Patenterteilung US 6,409,945 B1 bekannt. Der MIDLINER 3.0 der Firma GEIGER Handling GmbH & CO. KG mit der Anschrift, Steffensrott 7, in 52428 Jülich, offenbart ebenfalls eine bekannte Handhabungseinrichtung für Spritzgussmaschinen. Eine Broschüre des MIDLINER 3.0 ist unter folgender Internetadresse zu finden http://www.geigerhandling.com/pdf-flyer/ flyer_midliner_3-0.pdf (Stand 12.02.2018). Nachteilig ist hierbei allerdings, dass vor allem bei Linearführungseinrichtungen mit langem Hubabschnitt sehr große Kippmomente um die sich in eine erste horizontale Richtung entlang einer Längsrichtung des Maschinengestells erstreckende und auf dem Maschinengestell befestigte Linearführung entstehen. Diese Kippmomente müssen daher vollständig über die einzelnen Befestigungsmechanismen insbesondere zwischen dem ersten Schlitten und der zweiten Linearführung aufgenommen werden. Insbesondere vor dem Hintergrund des turmartigen Aufbaus der Handhabungseinrichtung oberhalb der Spritzgussanordnung stellt dies neben den konstruktiv bedingten Schwierigkeiten auch in sicherheitstechnischer Hinsicht eine besondere Herausforderung dar.

Aus diesem Grunde liegt der vorliegenden Erfindung die Aufgabe zugrunde, die Handhabungseinrichtung einer Kunststoffspritzgussmaschine derart zu verbessern, dass Kippmomente weitestgehend vermieden werden können.

Hierzu lehrt die Erfindung eine Kunststoffspritzgussmaschine nach Anspruch 1 sowie ein Verfahren zum Betrieb einer Kunststoffspritzgussmaschine mit einer Handhabungseinrichtung nach Anspruch 7.

Die Linearführungseinrichtung weist neben dem Hubabschnitt nunmehr auch einen Ausgleichsabschnitt auf, welcher sich ausgehend von der Linearführung gegenüberliegend des Hubabschnitts entlang der zweiten horizontalen Richtung erstreckt. Auf dem Ausgleichsabschnitt ist ein Ausgleichsgewicht verfahrbar angeordnet, das ein zum zweiten Schlitten mit dem Handhabungsmodul gegenläufiges Kippmoment erzeugt, so dass das Kippmoment der gesamten Handhabungseinrichtung reduziert und bevorzugt gänzlich ausgeglichen wird.

Das Ausgleichsgewicht ist hierbei während des Betriebes festgelegt, wobei selbstverständlich je nach Anforderung unterschiedliche Ausgleichsgewichte mit unterschiedlichen Massen durch Auswechselungen Anwendung finden können. Grundsätzlich erfolgt während des Betriebes der Kippmomentausgleich allerdings nur über die Positionierung des Ausgleichsgewichtes und damit über die Einstellung des für ein Gegenkippmoment wirksamen Hebels.

Somit sind grundsätzlich drei verschiedene Ausgestaltungsmöglichkeiten hinsichtlich der Wahl der Masse des Ausgleichsgewichts und dem Verhältnis der Längen des Ausgleichsabschnittes und des Hubabschnittes möglich.

Gemäß einer ersten Ausgestaltungsform sind sowohl der Hub- als auch der Ausgleichsabschnitt gleichlang ausgebildet, wobei das Ausgleichsgewicht in seiner Masse im Wesentlichen dem Gewicht des zweiten Schlittens und des darauf angeordneten Handhabungsmoduls entspricht. Im Wesentlichen meint dabei, dass evtl. von dem Handhabungsmodul aufgenommene Gegenstände, z.B. Formteile aus der Spritzgussanordnung, nicht in der Masse des Ausgleichsgewichts berücksichtigt sind.

In einer zweiten Ausgestaltung weist das Ausgleichsgewicht eine höhere Masse auf als das Gewicht des zweiten Schlittens und des darauf angeordneten Handhabungsmoduls, z.B. ist die Masse des Ausgleichsgewichts doppelt so hoch. Aus diesem Grunde kann der Ausgleichsabschnitt und damit der für das Ausgleichsgewicht wirksame Hebelarm mit einer kürzeren Länge ausgebildet werden, z.B. halb so lang. Eine solche Ausgestaltung ist besonders dann zweckmäßig, wenn für den Hubabschnitt kein ausreichend großer Bauraum zur Verfügung steht.

Gemäß einer dritten Ausgestaltung weist das Ausgleichsgewicht eine geringere Masse auf als das Gewicht des zweiten Schlittens und des darauf angeordneten Handhabungsmoduls, z.B. ist die Masse des Ausgleichsgewichts halb so hoch. Entsprechend muss der Ausgleichsabschnitt länger ausgebildet werden, als der Hubabschnitt, z.B. doppelt so lang. Wenngleich hierbei eine sehr viel größere Länge des Ausgleichsabschnittes in Kauf genommen werden muss und zudem auch das Gewicht der den Ausgleichsabschnitt bildenden Linearführung zum wirkenden Kippmoment nunmehr sehr viel stärker beiträgt, so kann über den dadurch verlängerten Hebelarm eine exaktere Einstellung des Kippmomentausgleichs erfolgen.

Gemäß einer Weiterbildung der Erfindung sind der Hubabschnitt und der Ausgleichsabschnitt der Linearführungseinrichtung von einer gemeinsamen zweiten Linearführung gebildet. Durch den strukturellen Zusammenhang zwischen dem Hub- und dem Ausgleichsabschnitt kann eine leichte und stabile Befestigung der Linearführungseinheit auf dem ersten Schlitten erfolgen. Grundsätzlich liegt es aber auch im Rahmen der Erfindung, dass sowohl für den Hub- als auch für den Ausgleichsabschnitt zwei separat voneinander gefertigte und gemeinsam auf dem ersten Schlitten befestigte Linearführungen verwendet werden.

Das Handhabungsmodul weist zumindest eine Aufnahmeeinrichtung auf, über die in der Spritzgussanordnung erzeugte Formteile aufgenommen werden können. Hierzu eignen sich beispielsweise mechanische Greifer, die elektrisch, pneumatisch oder hydraulisch angetrieben werden. Bei derartigen Greifern werden die Formteile zwischen zwei Klemmbacken verspannt und nach Abschluss des Transportvorganges wieder freigegeben. Grundsätzlich sind auch andere Ausgestaltungen wie beispielsweise Sauggreifer möglich.

In einer bevorzugten Weiterbildung der Erfindung weist das Handhabungsmodul einen dritten Schlitten und eine darauf verfahrbar angeordnete sich in vertikale Richtung erstreckende zweite Linearführungseinheit auf. Durch die sich in vertikaler Richtung erstreckende zweite Linearführungseinheit ist nunmehr auch eine Höhenänderung entlang des Transportweges möglich. Aus diesem Grunde ist vorzugsweise das Handhabungsmodul über den dritten Schlitten auf dem zweiten Schlitten befestigt. Somit verfährt nunmehr nicht der dritte Schlitten auf der zweiten Linearführungseinheit, sondern die zweite Linearführungseinheit entlang des dritten Schlittens. Hierbei ist die Aufnahmeeinrichtung direkt auf der Linearführungseinrichtung befestigt, vorzugsweise an einem stirnseitigen Ende der zweiten Linearführungseinheit.

Gemäß einer ersten Steuerungsvariante der Erfindung ist das Ausgleichsgewicht positionsgesteuert. Hierzu wird die Position des zweiten Schlittens auf dem Hubabschnitt bestimmt und das verfahrbare Ausgleichsgewicht entsprechend dieser Position auf dem Hubabschnitt verfahren. Die Bestimmung der Position kann beispielsweise über entsprechend Positionssensoren erfolgen. Bei der Steuerung können grundsätzlich auch das Gewicht eines aufgenommenen Gegenstandes sowie dynamische Effekte, wie das Beschleunigen und Abbremsen des Handhabungsmoduls in vertikaler Richtung berücksichtigt und kompensiert werden.

Gemäß einer zweiten Variante ist das Ausgleichsgewicht kraftgesteuert. Hierbei meint kraftgesteuert, dass neben der Bestimmung der Position des zweiten Schlittens auch das daran angeordnete Gewicht bestimmt und somit das um die sich in eine erste horizontale Richtung entlang einer Längsrichtung des Maschinengestells erstreckende und auf dem Maschinengestell befestigte Linearführung ausbildende Kippmoment bestimmbar ist. Entsprechend dieses Kippmomentes wird dann der verfahrbare Ausgleichsschlitten verfahren. Zur Bestimmung des an dem zweiten Schlitten angeordneten Gewichtes sind Kraftsensoren vorgesehen, die beispielsweise im zweiten Schlitten oder aber auch in der Linearführung angeordnet sind.

Gemäß einer bevorzugten Ausgestaltung der Erfindung werden die Schlitten über Linearmotoren angetrieben. Mit Linearmotoren können einerseits hohe Stellgeschwindigkeiten erreicht werden, und andererseits ist eine genaue Positionierung der Schlitten auf den jeweiligen Linearführungen möglich. In diesem Zusammenhang ist es auch vorteilhaft, wenn nicht nur die einzelnen Schlitten, sondern auch das verfahrbare Ausgleichsgewicht über einen Linearmotor angetrieben werden. Darüber hinaus ist bei Verwendung von Linearmotoren die Einbeziehung zusätzlicher Positionssensoren nicht notwendig, da die Information über die Position des jeweiligen Schlittens direkt aus dem jeweiligen Linearmotor ausgelesen werden kann.

Erfindungswesentlich ist neben der Kunststoffspritzgussmaschine nach Anspruch 1 auch ein Verfahren zum Betrieb einer Kunststoffspritzgussmaschine mit einer Handhabungseinrichtung nach Anspruch 7.

Für den Betrieb eignen sich grundsätzlich zwei unterschiedliche Verfahrensarten.

Gemäß einer ersten Variante erfasst oder berechnet eine Steuerungseinheit die Position des zweiten Schlittens und bestimmt davon ausgehend die erforderliche Ausgleichsposition des Ausgleichsgewichts. Dies erfolgt im einfachsten Fall über das Prinzip einer gleichen Hub- und Ausgleichslänge, wobei dann das Gewicht des Ausgleichsgewichts im Wesentlichen dem Gewicht des zweiten Schlittens und dem darauf angeordneten Handhabungsmoduls entspricht. Grundsätzlich ist es aber auch möglich, dass in der Steuerungseinheit ein Parameter hinterlegt ist, der den Umstand berücksichtigt, dass das Ausgleichsgewicht in seiner Masse einem Vielfachen des zweiten Schlittens und des darauf angeordneten Handhabungsmoduls entspricht und daher der zum Kippausgleich benötigte Abstand zwischen dem zweiten Schlitten und der sich in einer ersten horizontalen Richtung erstreckenden Linearführung ebenfalls einem Vielfachen des Abstandes zwischen der sich in eine erste horizontale Richtung erstreckenden Linearführung und dem Ausgleichsgewicht entspricht.

Gemäß einer zweiten Variante wird in der Steuerungseinheit über entsprechende Algorithmen und Parameter auch das Gewicht der vom Handhabungsmodul aufgenommenen Teile und bevorzugt auch auftretende dynamische Belastungen berücksichtigt. Dies ist grundsätzlich möglich, da der Transportvorgang mit derartigen lineargeführten Handhabungseinrichtungen vorgegeben und in einer hohen Wiederholungsfrequenz abläuft. Mit einem derartigen Verfahren können daher die Kippmomente deutlich besser reduziert bzw. ausgeglichen werden.

Gemäß einer Weiterbildung der Erfindung wird zunächst das Gewicht des Handhabungsmoduls über einen Kraftsensor erfasst und die Position des zweiten Schlittens bestimmt. Sowohl das Gewicht des Handhabungsmoduls und auch die Position des zweiten Schlittens werden anschließend an eine Steuerungseinheit übermittelt. Das Gewicht des zweiten Schlittens ist hierbei grundsätzlich bekannt und kann beispielsweise direkt in der Steuerungseinheit hinterlegt werden. Alternativ sind auch Ausgestaltungen denkbar, bei denen nicht nur das Gewicht des Handhabungsmoduls, sondern das gemeinsame Gewicht des Handhabungsmoduls und des zweiten Schlittens über einen Kraftsensor bestimmt wird. In der Steuerungseinheit wird anschließend eine Ausgleichsposition des Ausgleichsgewichtes derart bestimmt, dass das von dem Handhabungsmodul um die sich in eine erste horizontale Richtung erstreckende Linearführung ausgeübte Kippmoment durch das Ausgleichsgewicht an der Ausgleichsposition ausgeglichen werden kann. Hierzu wird zunächst ausgehend von dem Gewicht des zweiten Schlittens und des Handhabungsmoduls und dem anhand der Position des zweiten Schlittens bestimmten Hebelarms ein Kippmoment berechnet und die erforderliche Position des Ausgleichsschlittens derart bestimmt, dass das vom Ausgleichsschlitten erzeugte Kippmoment dem vom zweiten Schlitten und dem Handhabungsmodul erzeugten Kippmoment entgegensteht, so dass sich in Bezug auf die gesamte Handhabungseinrichtung die Kippmomente ausgleichen.

Im Vergleich zu der ersten Variante ist somit ein sehr viel gezielterer Kippmomentenausgleich möglich, da auch das an dem Handhabungsmodul angeordnete Gewicht eines Gegenstandes mit in den Kippmomentenausgleich berücksichtigt wird. Zudem können auch Beschleunigungsvorgänge und dadurch erzeugte Trägheitskräfte, z.B. durch einen dritten Schlitten mit in den Kippmomentenausgleich einbezogen werden.

Bevorzugt wird der zweite Schlitten und das Ausgleichsgewicht simultan bewegt, wobei simultan meint, dass die Zeitdifferenz zwischen dem Verfahren des zweiten Schlittens und dem Verfahren des Ausgleichsgewichtes vernachlässigbar klein ist, so dass zu jedem Zeitpunkt das am Hubabschnitt wirkende Kippmoment effektiv reduziert bzw. ausgeglichen werden kann.

Im Folgenden wird die Erfindung anhand einer lediglich ein Ausführungsbeispiel darstellenden Zeichnung näher erläutert. Es zeigen:
- Fig. 1: eine isometrische Ansicht einer Handhabungseinrichtung und
- Fig. 2: eine Draufsicht der Handhabungseinrichtung gemäß Fig. 1.

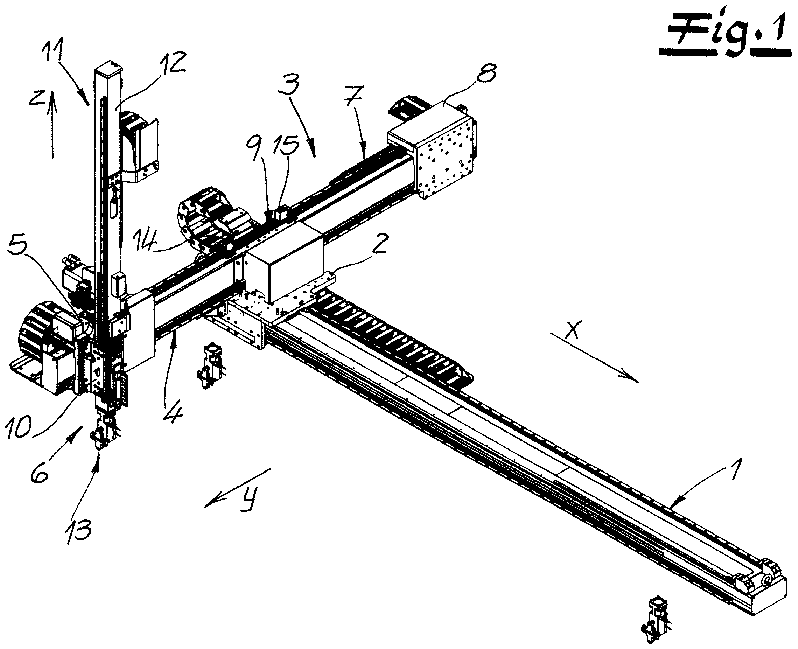

Die Fig. 1 zeigt eine Handhabungseinrichtung, die oberhalb einer Spritzgussanordnung auf einem Maschinengestell einer Kunststoffspritzgussmaschine angeordnet werden kann. Die Handhabungseinrichtung weist eine sich in eine erste horizontale Richtung x erstreckende Linearführung 1 mit einem entlang der Linearführung 1 verfahrbar angeordneten ersten Schlitten 2 auf. Hierbei bezieht sich die Kennzeichnung der Richtungen auf die allgemeinen Raumkoordinaten, wobei diese von der im Bau von Kunststoffspritzgussmaschinen üblichen Kennzeichnung abweichen kann.

Auf dem ersten Schlitten 2 ist wiederum eine Linearführungseinrichtung 3 mit einem sich entlang einer zweiten horizontalen Richtung y erstreckenden Hubabschnitt 4 befestigt. Auf dem Hubabschnitt 4 ist ein zweiter Schlitten 5 verfahrbar gelagert, wobei der zweite Schlitten 5 ein Handhabungsmodul 6 trägt.

Die Linearführungseinrichtung 3 weist zudem einen Ausgleichsabschnitt 7 auf, welcher sich ausgehend von der Linearführung 1 gegenüberliegend des Hubabschnitts 4 entlang der zweiten horizontalen Richtung y erstreckt, wobei ein Ausgleichsgewicht 8 zum Kippmomentenausgleich verfahrbar auf dem Ausgleichsabschnitt 7 angeordnet ist.

Sowohl der Hubabschnitt 4 als auch der Ausgleichsabschnitt 7 sind auf einer gemeinsamen zweiten Linearführung gebildet, wobei diese einen zentralen Befestigungsabschnitt 9 aufweist, über den die Linearführungseinrichtung 3 auf dem zweiten Schlitten 2 befestigt ist.

Das Handhabungsmodul 6 weist einen dritten Schlitten 10 und eine darauf verfahrbar angeordnete sich in vertikale Richtung z erstreckende zweite Linearführungseinheit 11 auf. Hierbei ist der dritte Schlitten 10 direkt auf dem zweiten Schlitten 5 befestigt, so dass nicht der dritte Schlitten 10 entlang der Linearführungseinrichtung 11 verfahren wird, sondern vielmehr die gesamte Linearführungseinrichtung 11 entlang des dritten Schlittens 10. Die Linearführungseinrichtung 11 weist dazu eine Linearführung 12 auf, an der am unteren Ende eine Aufnahmeeinrichtung in Form eines mechanischen Greifers 13 befestigt ist. Mit Hilfe des Greifers 13 können in der Spritzgussanordnung gefertigte Formteile entnommen und entlang des von der Handhabungseinrichtung aufgespannten Transportbereiches transportiert werden.

Die Schlitten 2, 5, 10 sowie das verfahrbare Ausgleichsgewicht 8 werden über Linearmotoren angetrieben, wobei die Position des zweiten Schlittens 5 und des Ausgleichsgewichts 8 ausgehend vom jeweiligen Ausgangspunkt 14, 15 direkt aus den Linearmotoren ausgelesen wird.

Anhand der so ermittelten Daten kann das Ausgleichsgewicht 8 positionsgesteuert werden.

Darüber hinaus weist die Handhabungseinrichtung auch einen Kraftmesssensor auf, über den das Gewicht des Handhabungsmoduls 6 sowie die vom Handhabungsmodul ausgeübten dynamischen Lasten ermittelt werden können, wobei im Zusammenhang mit der Positionsbestimmung des zweiten Schlittens das Ausgleichsgewicht 8 kraftgesteuert werden kann.

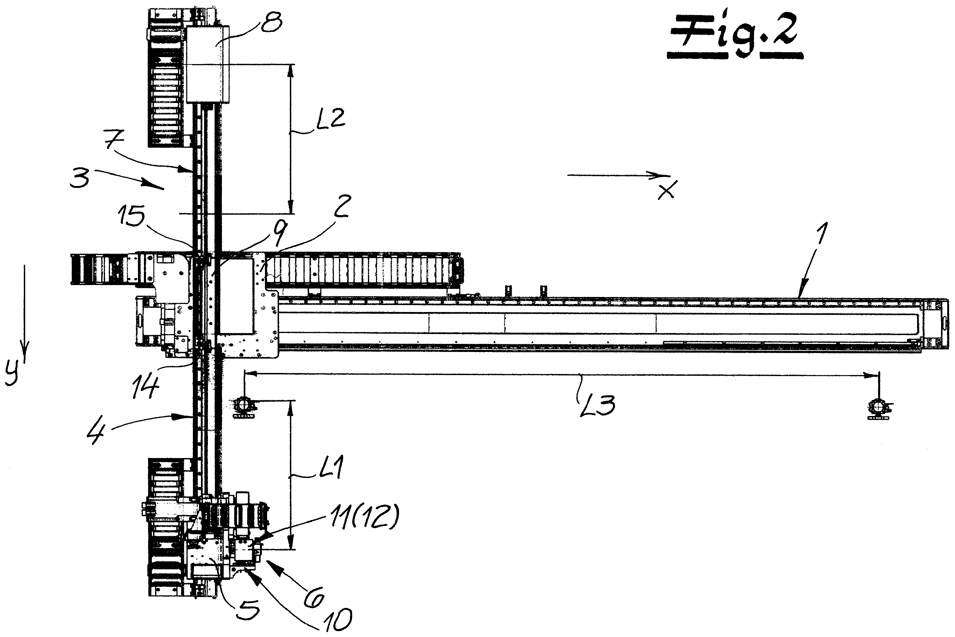

Die Fig. 2 zeigt die in Fig. 1 dargestellte Handhabungseinrichtung entlang einer vertikalen Richtung z. Bei der dargestellten Ausführungsform ist die sich in eine zweite horizontale Richtung y erstreckende Linearführungseinrichtung 3 derart ausgestaltet, dass die Länge L1 des Hubabschnittes 4 genauso lang ist wie die Länge L2 des Ausgleichsabschnittes 7. Entsprechend weist das Ausgleichsgewicht 8 eine Masse auf, die dem Gewicht des zweiten Schlittens 5 und des darauf angeordneten Handhabungsmoduls 6 entspricht. Die Länge L3 der sich in einer ersten horizontalen Richtung x erstreckenden Linearführung 1 ist dabei doppelt so lang wie die Länge des Hubabschnittes L1 und des Ausgleichsabschnittes L2 zusammen. Die Erfindung ist aber nicht auf eine solche Länge L3 der Linearführung 1 beschränkt, sondern kann darüber hinaus auch große Längen L3 umfassen.

## Patentansprüche

1. Kunststoffspritzgussmaschine mit einem eine Spritzgussanordnung aufnehmenden Maschinengestell und mit einer oberhalb der Spritzgussanordnung auf dem Maschinengestell angeordneten Handhabungseinrichtung, wobei die Handhabungseinrichtung eine sich in eine erste horizontale Richtung (x) entlang einer Längsrichtung des Maschinengestells erstreckende und auf dem Maschinengestell befestigte Linearführung (1) und einem entlang der Linearführung (1) verfahrbar angeordneten ersten Schlitten (2) aufweist, wobei auf dem ersten Schlitten (2) eine Linearführungseinrichtung (3) mit einem sich entlang einer zweiten horizontalen Richtung (y) erstreckenden Hubabschnitt (4) befestigt ist, auf dem ein zweiter Schlitten (5) verfahrbar gelagert ist, und wobei der zweite Schlitten (5) ein Handhabungsmodul (6) trägt, wobei die Linearführungseinrichtung (3) zudem einen Ausgleichsabschnitt (7) aufweist, welcher sich ausgehend von der Linearführung (1) gegenüberliegend des Hubabschnitts (4) entlang der zweiten horizontalen Richtung (y) erstreckt, wobei ein Ausgleichsgewicht (8) zum Kippmomentenausgleich verfahrbar auf dem Ausgleichsabschnitt (7) angeordnet ist.

2. Kunststoffspritzgussmaschine nach Anspruch 1, **dadurch gekennzeichnet, dass** der Hubabschnitt (4) und der Ausgleichsabschnitt (7) der Linearführungseinrichtung (3) von einer gemeinsamen zweiten Linearführung gebildet sind.

3. Kunststoffspritzgussmaschine nach Anspruch 1 oder 2, **dadurch gekennzeichnet, dass** das Handhabungsmodul (6) einen dritten Schlitten (10) und eine darauf verfahrbar angeordnete sich in vertikaler Richtung (z) erstreckende zweite Linearführungseinheit (11) aufweist.

4. Kunststoffspritzgussmaschine nach einem der Ansprüche 1 bis 3, **dadurch gekennzeichnet, dass** das Ausgleichsgewicht positionsgesteuert ist.

5. Kunststoffspritzgussmaschine nach einem der Ansprüche 1 bis 4, **dadurch gekennzeichnet, dass** das Ausgleichsgewicht kraftgesteuert ist.

6. Kunststoffspritzgussmaschine nach einem der Ansprüche 1 bis 5, **dadurch gekennzeichnet, dass** die Schlitten (2, 5, 10) über Linearmotoren angetrieben werden.

7. Verfahren zum Betrieb einer Kunststoffspritzgussmaschine mit einer Handhabungseinrichtung nach einem der Ansprüche 1 bis 6.

8. Verfahren nach Anspruch 7, **dadurch gekennzeichnet, dass** eine Steuerungseinheit die Position des zweiten Schlittens (5) erfasst oder berechnet und davon ausgehend die erforderliche Ausgleichsposition des Ausgleichsgewichts (8) derart bestimmt, dass der Abstand zwischen dem zweiten Schlitten (5) und der sich in einer ersten horizontalen Richtung (x) erstreckenden Linearführung (1) dem Abstand oder einem Vielfachen des Abstandes zwischen der sich in einer ersten horizontalen Richtung (x) erstreckenden Linearführung (1) und dem Ausgleichsgewicht (8) entspricht oder das von dem Handhabungsmodul (6) um die sich in einer ersten horizontalen Richtung (x) erstreckende Linearführung (1) ausgeübte Kippmoment durch das Ausgleichsgewicht (8) an der Ausgleichsposition ausgeglichen werden kann, wobei das Ausgleichsgewicht (8) an die Ausgleichsposition verfahren wird.

9. Verfahren nach Anspruch 7, **dadurch gekennzeichnet, dass** zunächst ein Kraftsensor das Gewicht des Handhabungsmoduls (6) erfasst und die Position des zweiten Schlittens (5) bestimmt und das Gewicht und die Position an die Steuerungseinheit übermittelt wird, wobei die Steuerungseinheit eine Ausgleichsposition des Ausgleichsgewichts (8) derart bestimmt, dass das von dem Handhabungsmodul (6) um die sich in eine erste horizontale Richtung (x) erstreckende Linearführung (1) ausgeübte Kippmoment durch das Ausgleichsgewicht (8) an der Ausgleichsposition ausgeglichen werden kann, wobei anschließend das Ausgleichsgewicht (8) an die Ausgleichsposition verfahren wird.

10. Verfahren nach einem der Ansprüche 7 bis 9, **dadurch gekennzeichnet, dass** der zweite Schlitten (5) und das verfahrbare Ausgleichsgewicht (8) simultan bewegt werden.

## Claims

1. A plastic injection moulding machine with a machine frame that accommodates an injection moulding arrangement and with a handling device that is arranged on the machine frame above the injection moulding arrangement, wherein the handling device has a linear guide (1) that extends in a first horizontal direction (x) along a longitudinal direction of the machine frame and is fastened on the machine frame, as well as a first carriage (2) that is arranged so as to be displaceable along the linear guide (1), wherein a linear guiding device (3) with a travel section (4), which extends along a second horizontal direction (y) and on which a second carriage (5) is displaceably supported, is fastened on the first carriage (2), and wherein the second carriage (5) carries a handling module (6),
wherein
the linear guiding device (3) furthermore has a compensating section (7), which starting from the linear guide (1) extends along the second horizontal direction (y) opposite of the travel section (4), and wherein a balancing weight (8) for compensating tilting moments is displaceably arranged on the compensating section (7).

2. The plastic injection moulding machine according to claim 1, **characterized in that** the travel section (4) and the compensating section (7) of the linear guiding device (3) are formed by a common second linear guide.

3. The plastic injection moulding machine according to claim 1 or 2, **characterized in that** the handling module (6) has a third carriage (10) and a second linear guiding unit (11), which is displaceably arranged on the third carriage and extends in the vertical direction (z).

4. The plastic injection moulding machine according to one of claims 1 to 3, **characterized in that** the balancing weight is position-controlled.

5. The plastic injection moulding machine according to one of claims 1 to 4, **characterized in that** the balancing weight is force-controlled.

6. The plastic injection moulding machine according to one of claims 1 to 5, **characterized in that** the carriages (2, 5, 10) are driven by linear motors.

7. A method for operating a plastic injection moulding machine with a handling device according to one of claims 1 to 6.

8. The method according to claim 7, **characterized in that** a control unit detects or calculates the position of the second carriage (5) and determines the required compensating position of the balancing weight (8) based on the position of the second carriage in such a way that the distance between the second carriage (5) and the linear guide (1) extending in a first horizontal direction (x) corresponds to the distance or to a multiple of the distance between the linear guide (1) extending in a first horizontal direction (x) and the balancing weight (8) or that the tilting moment exerted by the handling module (6) about the linear guide (1) extending in a first horizontal direction (x) can be compensated by the balancing weight (8) in the compensating position, wherein the balancing weight (8) is displaced into the compensating position.

9. The method according to claim 7, **characterized in that** a force sensor initially detects the weight of the handling module (6) and determines the position of the second carriage (5), and **in that** the weight and the position are transmitted to the control unit, wherein the control unit determines a compensating position of the balancing weight (8) in such a way that the tilting moment exerted by the handling module (6) about the linear guide (1) extending in a first horizontal direction (x) can be compensated by the balancing weight (8) in the compensating position, and wherein the balancing weight (8) is subsequently displaced into the compensating position.

10. The method according to one of claims 7 to 9, **characterized in that** the second carriage (5) and the displaceable balancing weight (8) are moved simultaneously.

## Revendications

1. Presse d'injection de matières plastiques, comprenant un bâti de machine recevant un ensemble d'injection et un système de manipulation placé sur le bâti de machine, au-dessus de l'ensemble d'injection, le système de manipulation comportant un guidage linéaire (1) s'étendant dans une première direction horizontale (x), le long d'une direction longitudinale du bâti de machine et fixé sur le bâti de machine et un premier chariot (2), placé en étant déplaçable le long du guidage linéaire (1), sur le premier chariot (2) étant fixé un système de guidage linéaire (3) comprenant un segment de course (4) s'étendant le long d'une deuxième direction horizontale (y), sur lequel un deuxième chariot (5) est logé de manière déplaçable, et le deuxième chariot (5) portant un module de manipulation (6),
le système de guidage linéaire (3) comportant par ailleurs un segment d̅'équilibrage (7), lequel s'étend à partir du guidage linéaire (1) à l'opposée du segment de course (4), le long de la deuxième direction horizontale (y), un contrepoids (8) étant placé de manière déplaçable sur le segment d'équilibrage (7), pour équilibrer le couple de basculement.

2. Presse d'injection de matières plastiques selon la revendication 1, **caractérisée en ce que** le segment de course (4) et le segment d'équilibrage (7) du système de guidage linéaire (3) sont formés par un deuxième guidage linéaire commun.

3. Presse d'injection de matières plastiques selon la revendication 1 ou 2, **caractérisée en ce que** le module de manipulation (6) comporte un troisième chariot (10) et une deuxième unité de guidage linéaire (11), placée en étant déplaçable sur ce dernier, s'étendant dans une direction verticale (z).

4. Presse d'injection de matières plastiques selon l'une quelconque des revendications 1 à 3, **caractérisée en ce que** le contrepoids est commandé en position.

5. Presse d'injection de matières plastiques selon l'une quelconque des revendications 1 à 4, **caractérisée en ce que** le contrepoids est commandé en force.

6. Presse d'injection de matières plastiques selon l'une quelconque des revendications 1 à 5, **caractérisée en ce que** les chariots (2, 5, 10) sont entraînés via des moteurs linéaires.

7. Procédé opérationnel d'une presse d'injection de matières plastiques dotée d'un système de manipulation selon l'une quelconque des revendications 1 à 6.

8. Procédé selon la revendication 7, **caractérisée en ce qu'**une unité de commande détecte ou calcule la position du deuxième chariot (5) et en partant de celle-ci, détermine la position d'équilibrage requise du contrepoids (8), de telle sorte que l'écart entre le deuxième chariot (5) et le guidage linéaire (1) s'étendant dans une première direction horizontale (x) corresponde à l'écart ou à un multiple de l'écart entre le guidage linéaire (1) s'étendant dans une première direction horizontale (x) et le contrepoids (8) que le couple de basculement exercé par le module de manipulation (6) autour du guidage linéaire (1) s'étendant dans une première direction horizontale (x) soit équilibré par le contrepoids (8) sur la position d'équilibrage, le contrepoids (8) étant déplacé dans la position d'équilibrage.

9. Procédé selon la revendication 7, **caractérisé en ce que** d'abord, un capteur de force détecte le poids du module de manipulation (6) et détermine la position du deuxième chariot (5) et **en ce que** le poids et la position sont transmis à l'unité de commande, l'unité de commande déterminant une position d'équilibrage du contrepoids (8), de telle sorte que le couple de basculement exercé par le module de manipulation (6) autour du guidage linéaire (1) s'étendant dans une première direction horizontale (x) puisse être équilibré par le contrepoids (8) sur la position d'équilibrage, par la suite, le contrepoids (8) étant déplacé dans la position d'équilibrage.

10. Procédé selon l'une quelconque des revendications 7 à 9, **caractérisé en ce que** le deuxième chariot (5) et le contrepoids (8) déplaçable sont bougés simultanément.
